# EUROPÄISCHE PATENTANMELDUNG

(11) **EP 2 287 573 A1**
(43) Veröffentlichungstag der Anmeldung: **23.02.2011**
(21) Anmeldenummer: 09168167.6
(22) Anmeldetag: 19.08.2009
(51) Int. Cl.: G01H 1/00

(54) **Vorrichtung und Verfahren zur Maschinendiagnostik mittels Schwingungsmessung**

(71) Anmelder: Prüftechnik Dieter Busch AG, 85737 Ismaning (DE)
(72) Erfinder: Kuchler, Alexander, 85716, Unterschleissheim (DE)

(57) **Zusammenfassung**

Die Erfindung betrifft eine Vorrichtung zur Maschinendiagnostik, mit einem Schwingungssensor (12) zum Erfassen von Schwingungssignales an einer Maschine (10), einer Einheit (14) zum Konditionieren der Schwingungssignale, einem A/D-Wandler (16) zum Digitalisieren der konditionierten Schwingungssignale, einer Datenverarbeitungseinheit (20) zum Aufspalten der digitalen Signale in mindestens zwei Frequenzbereiche, wobei die Datenverarbeitungseinheit ausgebildet ist, um für jeden Frequenzbereich das Signal auf eine Amplitudenauflösung zu skalieren, die kleiner als die Amplitudenauflösung des A/D-Wandlers ist, und einer Auswertungseinheit (30) für die weitere Auswertung der aufgespaltenen Signale.

## Beschreibung

Die vorliegende Erfindung betrifft eine Vorrichtung und ein Verfahren zur Maschinendiagnostik, wobei mittels eines Schwingungssensors Schwingungssignale an der Maschine erfasst werden und anschließend digital verarbeitet werden.

Bei typischen Anwendungen in der Maschinendiagnostik und -instandhaltung müssen sowohl Signalanteile im hoch- wie auch im tieffrequenten Bereich untersucht werden. Da bei gleicher Messgröße (Beschleunigung, Geschwindigkeit, Weg) die unterschiedlichen Frequenzbereiche mit stark unterschiedlichen Amplituden auftreten, wird das Signal üblicherweise zunächst in verschiedene Frequenzbereiche unterteilt und entsprechend gefiltert und anschließend so verstärkt, dass das Signal des jeweiligen Frequenzbereichs den Analog-Digital-Wandler (ADC) möglichst optimal ansteuert. Die Signalerfassung selbst kann entweder parallel mit mehreren Signalpfaden und ADCs erfolgen oder seriell nacheinander durch Aufschalten verschiedener Analogkanäle auf einen einzelnen ADC .

Eine Möglichkeit zur Reduzierung der Anzahl der benötigten ADCs bei gleichbleibender Messzeit ist der Einsatz eines höher auflösenden ADCs. Eine solche Lösung ist beispielsweise in der US 5,633,811 beschrieben, wo zur Digitalisierung ein Sigma-Delta-ADC verwendet wird. Ferner ist in der US 5,633,811 ist auch ein Beispiel dafür angegeben, dass ein langsamer ADC und ein schneller ADC parallel geschaltet werden können, um für eine optimierte Digitalisierung in verschiedene Frequenzbereichen zu sorgen. Weitere Beispiele für die Verwendung von Sigma-Delta-ADCs zur Schwingungsanalyse von Maschinen sind in der US 6,507,790 B1 oder der DE 10 2007 042 678 A1 zu finden.

Nachteilig bei der Verwendung eines hochauflösenden ADCs ist, dass die anfallende Datenmenge entsprechend der hohen ADC-Auflösung sehr groß ausfällt und somit die Weiterverarbeitung des digitalisierten Signals erschwert.

Es ist Aufgabe der vorliegenden Erfindung, eine Vorrichtung zur Maschinendiagnostik mittels Schwingungsanalyse zu schaffen, welche für eine optimierte digitale Signalauswertung sorgt. Es ist ferner Aufgabe der Erfindung für ein entsprechendes Verfahren zu sorgen.

Diese Aufgabe wird erfindungsgemäß gelöst durch eine Vorrichtung gemäß Anspruch 1 bzw. ein Verfahren gemäß Anspruch 9.

Bei der erfindungsgemäßen Lösung ist vorteilhaft, dass dadurch, dass eine Datenverarbeitungseinheit zum Aufspalten der digitalen Signale in mindestens zwei Frequenzbereiche vorgesehen ist, die ausgebildet ist, um für jeden Frequenzbereich das Signal auf eine Amplitudenauflösung zu skalieren, die kleiner als die Amplitudenauflösung des ADC ist, die weitere Verarbeitung der digitalen Schwingungsmessdaten aufgrund der reduzierten Amplitudenauflösung verringert wird, ohne dass ein Genauigkeitsverlust eintritt, da die hohe Auflösungsbandbreite des ADC nach der digitalen Frequenzaufspaltung überhaupt nicht mehr ausgenutzt werden kann und meist eine geringere Auflösung ausreichend ist.

Bevorzugte Ausgestaltungen der Erfindung ergeben sich aus den Unteransprüchen.

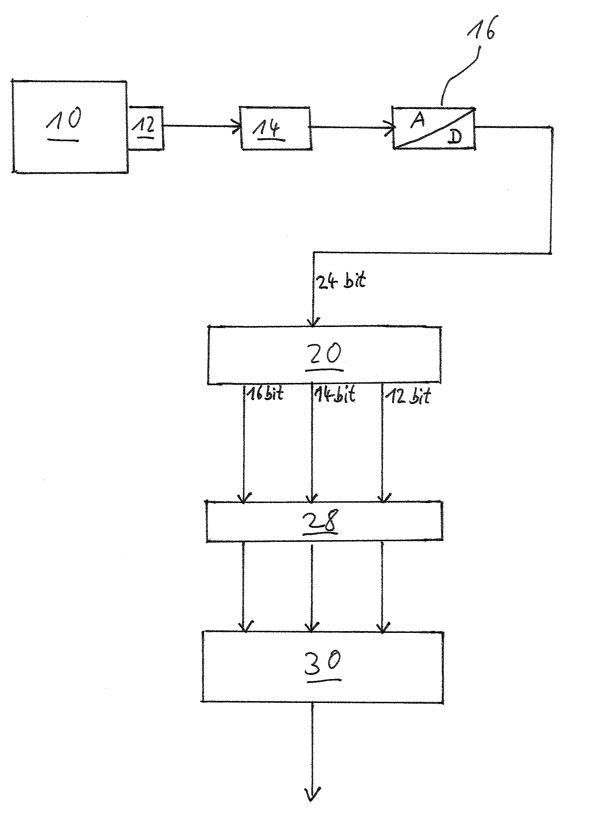

Im folgenden wird eine Ausführungsform der Erfindung anhand der beigefügten Zeichnung beispielhaft näher erläutert, welche ein Blockdiagramm der Datenverarbeitung eines Beispiels einer Vorrichtung zur Maschinendiagnostik zeigt.

Gemäß der einzigen Figur weist das gezeigte Beispiel einer erfindungsgemäßen Vorrichtung zur Maschinendiagnostik einen Schwingungssensor 12 zum Erfassen von Schwingungssignalen an einer Maschine 10 auf, wobei die Schwingungssignale in einer Einheit 14 in der für den nachfolgenden ADC 16 erforderlichen Weise analog konditioniert werden. Typischerweise umfasst die Konditioniereinheit 14 Anti-Aliasing Filter (Tiefpass) sowie einen variablen Verstärker, um den ADC 16 gut auszusteuern.

Die konditionierten Signale werden von dem ADC 16 breitbandig digitalisiert und als kontinuierlicher, hochaufgelöster Datenstrom 18 an eine Datenverarbeitungseinheit 20 übergeben. Vorzugsweise weist der ADC 16 eine Abtastrate von mindestens 100 kHz und eine Amplitudenauflösung von mindestens 18 bit auf. Vorzugsweise ist der ADC in Sigma-Delta-Technik implementiert.

Die Datenverarbeitungseinheit 20 ist ausgebildet, um das breitbandige Signal 18 in mehrere Frequenzbereiche (im gezeigten Beispiel drei Frequenzbereiche) aufzuspalten und das Signal in jedem Frequenzbereich auf eine Amplitudenauflösung zu skalieren, die kleiner als die Amplitudenauflösung des ADC 16 ist. Vorzugsweise ist die Amplitudenauflösung für jeden der Frequenzbereiche um mindestens 2 bit geringer als die Auflösung des A/D-Wandlers. Im gezeigten Beispiel beträgt die Amplitudenauflösung des ADC 16 -und damit die Breite des Datenstroms 18- 24 bit, während die Auflösung bzw. Breite der drei frequenzaufgespaltenen Ströme 22, 24 und 26 16 bit, 14 bit bzw. 12 bit beträgt. Vorzugsweise beträgt die Amplitudenauflösung für jeden der Fequenzbereiche maximal 16 bit.

Die frequenzaufgespaltenen Signale 22, 24, 26 werden in einem Speicher 28 abgelegt und von dort an einen als Auswertungseinheit dienenden Prozessor 30 zur weiteren Auswertung übergeben. Im gezeigten Beispiel sind die Datenverarbeitungseinheit 20 und der Prozessor 30 als separate Baugruppen realisiert, die jeweils per DMA (Direct Memory Access) mit dem Speicher 28 verbunden sind. Grundsätzlich könnten jedoch die Datenverarbeitungseinheit 20, der Speicher 28 und der Prozessor 30 auch in derselben Baugruppe realisiert sein.

Die Datenverarbeitungseinheit 20 kann beispielsweise als FPGA (Field Programmable Gate Array), CPLD (Complex Programmable Logic Device), DSP (Digitaler Signalprozessor) oder als Systemprozessor realisiert werden.

Es versteht sich, dass die Diagnosevorrichtung mehrkanalig ausgebildet sein kann, wobei dann für jeden Eingang vorzugsweise eine separate Konditionierungseinheit 14, ein separater ADC 16 und eine separate Datenverarbeitungseinheit 20 zur Verfügung steht.

Als Variante kann der Prozessor 30 als DSP zusätzlich zum Systemprozessor ausgeführt sein und die Signalverarbeitung übernehmen und dann entweder weiter gefilterte und/oder anderweitig modifizierte Signale oder auch berechnete Endergebnisse zum Speichern und/oder Anzeigen an den Systemprozessor übergeben.

Die vorliegende Erfindung bietet die folgenden Vorteile: es können gut ausgesteuerte Signalströme in verschiedenen Frequenzbereichen gewonnen werden; es können mehrere Signalströme in verschiedenen Frequenzbereichen parallel gewonnen werden; die anfallende Datenmenge wird auf das benötigte Maß reduziert; eine mehrfache Ausführung der analogen Signalkonditionierung kann vermieden werden; die Verwendung mehrerer ADCs kann vermieden werden.

## Patentansprüche

1. Vorrichtung zur Maschinendiagnostik, mit
einem Schwingungssensor (12) zum Erfassen von Schwingungssignales an einer Maschine (10),
einer Einheit (14) zum Konditionieren der Schwingungssignale,
einem A/D-Wandler (16) zum Digitalisieren der konditionierten Schwingungssignale,
einer Datenverarbeitungseinheit (20) zum Aufspalten der digitalen Signale in mindestens zwei Frequenzbereiche, wobei die Datenverarbeitungseinheit ausgebildet ist, um für jeden Frequenzbereich das Signal auf eine Amplitudenauflösung zu skalieren, die kleiner als die Amplitudenauflösung des A/D-Wandlers ist, und
einer Auswertungseinheit (30) für die weitere Auswertung der aufgespaltenen Signale.

2. Vorrichtung gemäß Anspruch 2, **dadurch gekennzeichnet, dass** der A/D-Wandler (16) eine Abtastrate von mindestens 100 kHz aufweist.

3. Vorrichtung gemäß Anspruch 1 oder 2, **dadurch gekennzeichnet, dass** der A/D-Wandler (16) eine Amplitudenauflösung von mindestens 18 bit aufweist.

4. Vorrichtung gemäß einem der vorhergehenden Ansprüche, **dadurch gekennzeichnet, dass** die Amplitudenauflösung für jeden der Fequenzbereiche maximal 16 bit beträgt.

5. Vorrichtung gemäß einem der vorhergehenden Ansprüche, **dadurch gekennzeichnet, dass** der A/D-Wandler (16) in Sigma-Delta-Technik implementiert ist.

6. Vorrichtung gemäß einem der vorhergehenden Ansprüche, **dadurch gekennzeichnet, dass** die Datenverarbeitungseinheit (20) und die Auswertungseinheit (30) als getrennte Baugruppen realisiert sind und jeweils per DMA (Direct Memory Access) mit einem Speicher (28) verbunden sind, über welchen die Signale übergeben werden.

7. Vorrichtung gemäß einem der vorhergehenden Ansprüche, **dadurch gekennzeichnet, dass** die Vorrichtung mehrkanalig ausgebildet ist, wobei für jeden Eingang eine eigene Konditionierungseinheit (14), ein eigener A/D-Wandler (16) und eine eigene Datenverarbeitungseinheit (20) zur Frequenzaufspaltung vorgesehen sind.

8. Vorrichtung gemäß einem der vorhergehenden Ansprüche, **dadurch gekennzeichnet, dass** die Amplitudenauflösung für jeden der Frequenzbereiche um mindestens 2 bit geringer als die Auflösung des A/D-Wandlers ist.

9. Verfahren zur Maschinendiagnostik, wobei
mittels eines Schwingungssensors (12) Schwingungssignale an einer Maschine (10) erfasst werden,
die Schwingungssignale konditioniert werden,
die konditionierten Schwingungssignale mittels eines A/D-Wandlers (16) digitalisiert werden,
die digitalen Signale mittels einer Datenverarbeitungseinheit (20) in mindestens zwei Frequenzbereiche aufgespalten werden, wobei für jeden Frequenzbereich das Signal auf eine Amplitudenauflösung skaliert wird, die kleiner als die Amplitudenauflösung des A/D-Wandlers ist, und
die aufgespaltenen Signale an eine Auswertungseinheit (30) zur weiteren Auswertung übergeben werden.
